# EUROPEAN PATENT SPECIFICATION

(11) **EP 3 884 345 B1**
(45) Date of publication and mention of the grant of the patent: **21.10.2026**
(21) Application number: 19887503.1
(22) Date of filing: 18.07.2019
(51) Int. Cl.: B25J 9/16

(54) **METHOD AND SYSTEM FOR PREDICTING MOTION-OUTCOME DATA OF A ROBOT MOVING BETWEEN A GIVEN PAIR OF ROBOTIC LOCATIONS**
VERFAHREN UND SYSTEM ZUR VORHERSAGE VON BEWEGUNGSERGEBNISDATEN EINES ROBOTERS, DER SICH ZWISCHEN EINEM VORGEGEBENEN PAAR VON ROBOTERSTANDORTEN BEWEGT
PROCÉDÉ ET SYSTÈME DE PRÉDICTION DE DONNÉES DE RÉSULTAT DE MOUVEMENT D'UN ROBOT SE DÉPLAÇANT ENTRE UNE PAIRE DONNÉE D'EMPLACEMENTS ROBOTIQUES

(30) Priority: 20.11.2018 US 201816196156
(43) Date of publication of application: 29.09.2021
(73) Proprietor: Siemens Industry Software Ltd., 7019900 Airport City (IL)
(72) Inventor: HAZAN, Moshe, 4083918 Elad (IL); ZEMSKY, Maxim, 4920308 Petah Tikva (IL)
(74) Representative: Siemens Patent Attorneys
(86) International application number: PCT/IB2019/056158
(87) International publication number: WO 2020/104864

(56) References cited:
- US-A1- 2011 153 080
- US-A1- 2016 096 272
- US-A1- 2017 190 051
- US-A1- 2018 250 818
- US-A1- 2018 330 200
- HAO-TIEN LEWIS CHIANG ET AL: "Deep Neural Networks for Swept Volume Prediction Between Configurations", ARXIV.ORG, CORNELL UNIVERSITY LIBRARY, 201 OLIN LIBRARY CORNELL UNIVERSITY ITHACA, NY 14853, 29 May 2018 (2018-05-29), XP080883747
- HERMANN ANDREAS ET AL: "Anticipate your surroundings: Predictive collision detection between dynamic obstacles and planned robot trajectories on the GPU", 2015 EUROPEAN CONFERENCE ON MOBILE ROBOTS (ECMR), IEEE, 2 September 2015 (2015-09-02), pages 1 - 8, XP032809240, DOI: 10.1109/ECMR.2015.7324047
- TAUBIG H ET AL: "Real-time swept volume and distance computation for self collision detection", INTELLIGENT ROBOTS AND SYSTEMS (IROS), 2011 IEEE/RSJ INTERNATIONAL CONFERENCE ON, IEEE, 25 September 2011 (2011-09-25), pages 1585 - 1592, XP032200808, ISBN: 978-1-61284-454-1, DOI: 10.1109/IROS.2011.6094611

## Description

### TECHNICAL FIELD

The present disclosure is directed, in general, to computer-aided design, visualization, and manufacturing ("CAD") systems, product lifecycle management ("PLM") systems, product data management ("PDM") systems, and similar systems, that manage data for products and other items (collectively, "Product Data Management" systems or PDM systems). More specifically, the disclosure is directed to production environment simulation.

### BACKGROUND OF THE DISCLOSURE

In industrial automation, applications performing robotic simulations are used for getting outcome data of robotic motions for validation and optimization purposes.

Chiang et al: "Deep Neural Networks for Swept Volume Prediction Between Configurations", arxiv.org:1805.11597, 29.05.2018, relates to the determination of a swept volume.

Examples of robotic simulation platforms and systems include, but are not limited to, Computer Assisted Robotic ("CAR") tools, Process Simulate (a product of Siemens PLM software suite), robotic simulations tools, and other systems and virtual stations for industrial robotic simulation.

In order to improve the accuracy level of generic robotic MOtion Planner modules (MOPs), robotic vendors agreed on a Realistic Robot Simulation ("RRS") protocol so that Robot Controller Software (RCS) modules may now be supplied for providing, among other functionalities, motion outcome prediction functionalities. Vendor-specific Virtual Robot Controllers ("VRC") are other examples of modules simulating robotic motion trajectories and motion-outcome data.

Outcome data from robots' motions comprises swept volume data; e.g. useful in industrial automation for detecting potential robotic collisions. Examples of outcome data from robots' motions may further include one of:
- cycle time data; e.g. useful in industrial automation for scheduling, efficient operating and/or maintaining the robotic process;
- energy consumption data; e.g. useful in industrial automation for achieving cost reductions and/or meeting environmental regulations;
- robot's joint movements data; e.g. useful in industrial automation for optimizing maintenance;
- intermediate robotic locations data; e.g. useful in industrial automation for predicting a robot trajectory.

The robot's swept volume mentioned above represents the entire 3 Dimensional ("3D") space generated by the motion of the robot and its attached objects like e.g. tools along their path during a specific robotic program or robotic operation. Determining the robot's swept volume is particularly useful for collision detection purposes in order to avoid collisions between the robots and other robotic cell entities like pieces of equipment, objects and/or humans.

Unfortunately, running robotic simulations is typically a very time-consuming task. This is even more true in robotic simulations for collision detection validations and optimizations. For example, in some scenarios, optimization algorithms are required to find an optimal free collision path optimizing one or more parameter e.g. like robotic cycle time, energy, joints movements, robot trajectory, robot intermediate locations and/or other robotic motion outcomes. In such scenarios, the optimization algorithms are then required to run a large amount of different simulations, gathering their motion-outcomes, processing their results and providing the optimal solutions.

Therefore, improved techniques for predicting motion outcomes of a specific robot are desirable.

### SUMMARY OF THE DISCLOSURE

The invention provides methods, systems, and computer readable mediums for predicting motion-outcome data of a robot moving between a given pair of robotic locations as recited in the independent claims, which define the invention. Advantageous embodiments are provided by the dependent claims. A method includes receiving data on a given pair of robotic locations as input data. The method includes applying a function trained by a machine learning algorithm to the input data, wherein a related robotic motion-outcome data is generated as output. The method further includes providing as output data the robotic motion-outcome data.

A method includes receiving a plurality of robotic location pair data as input training data. The method includes receiving a plurality of motion-outcome data as output training data, wherein the plurality of motion-outcome data is related to the plurality robotic location pair data. The method further includes training by a machine learning algorithm a function based on the input training data and output training data. The method further includes providing the trained function as motion-outcome prediction module for predicting as output data a motion-outcome data of a robot moving between a corresponding pair of robotic locations. The method further including predicting a motion-outcome data by applying the motion-outcome prediction module to a given robotic location pair as input data.

Various disclosed embodiments include methods, systems, and computer readable mediums for providing a function trained by a machine learning algorithm. The method includes receiving a plurality of robotic location pair data as input training data. The method further includes receiving a plurality of motion-outcome data as output training data, wherein the plurality of the motion-outcome data is related to the plurality robotic location pair data. The method further includes training by a machine learning algorithm a function based on the input training data and on the output training data. The method further includes providing the trained function for predicting motion-outcome data of a robot moving between a corresponding pair of robotic locations.

The foregoing has outlined rather broadly the features and technical advantages of the present disclosure so that those skilled in the art may better understand the detailed description that follows. Additional features and advantages of the disclosure will be described hereinafter that form the subject of the claims. Those skilled in the art will appreciate that they may readily use the conception and the specific embodiment disclosed as a basis for modifying or designing other structures for carrying out the same purposes of the present disclosure within the scope of the appended claims, which define the invention.

### BRIEF DESCRIPTION OF THE DRAWINGS

For a more complete understanding of the present disclosure, and the advantages thereof, reference is now made to the following descriptions taken in conjunction with the accompanying drawings, wherein like numbers designate like objects, and in which:
Figure 1 illustrates a block diagram of a data processing system in which an embodiment can be implemented.
Figure 2 is a flow chart schematically illustrating training and using of a robotic motion-outcome prediction module in accordance with disclosed embodiments.
Figure 3 is a graph schematically illustrating how to increase training data in accordance with disclosed embodiments.
Figure 4 is a block diagram schematically illustrating a plurality of robotic motion-outcome prediction modules in accordance with disclosed embodiments.
Figure 5 is a drawing schematically illustrating an example of a swept volume of a virtual robot.
Figure 6 is a drawing schematically illustrating a cloud of points representing a space around a robot in accordance with disclosed embodiments.
Figure 7 is a drawing schematically illustrating highlighted points representing a swept volume of a robot in accordance with disclosed embodiments.
Figure 8 illustrates a flowchart for predicting a motion-outcome data of a moving robot in accordance with disclosed embodiments.

### DETAILED DESCRIPTION

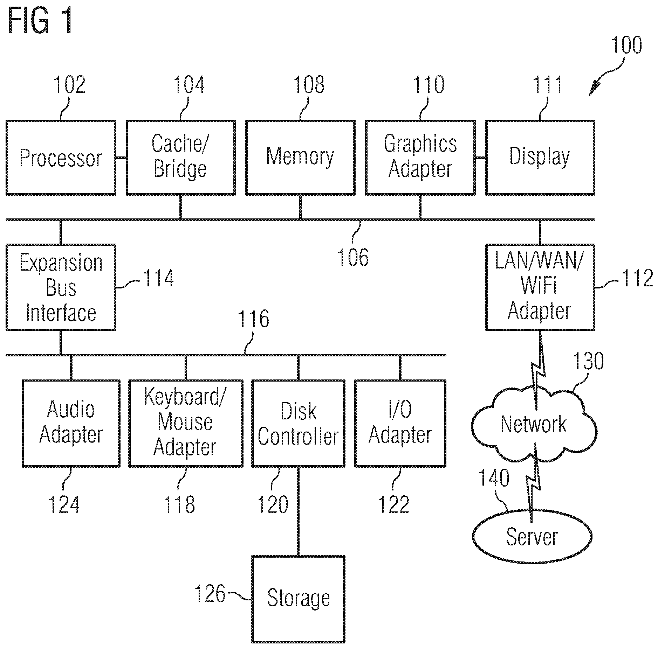

FIGURES 1 through 8, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged device, within the scope of the appended claims, which define the invention. The numerous innovative teachings of the present application will be described with reference to exemplary non-limiting embodiments.

Previous techniques for predicting motion-outcome data of a specific robot moving between a given pair of robotic locations have some drawbacks. The embodiments disclosed herein provide numerous technical benefits, including but not limited to the following examples.

Embodiments enable prediction of motion-outcome data of a specific robot without the need to run a robot's simulation.

Embodiments avoid in incurring in some of the performance drawbacks of running robotic simulations.

Embodiments enable accurate prediction of motion-outcome data of a specific robot without launching an RCS service.

Embodiments enable fast data communication not depending on external client-server communication of RRS.

Embodiments enable time savings.

Embodiments enable accurate prediction of motion-outcome data of a specific robot having no RCS modules.

Embodiments enable accurate prediction of motion-outcome data of a broad spectrum of robots of a broad spectrum of robot's vendors.

Embodiments enable accurate prediction of motion-outcome data of robots having complex kinematics as, for example, delta/spider robots or other next generation robots.

Embodiments may be used for robot validation or optimization purposes.

Embodiments enable robotic collision detection validations.

Embodiments enable upgrading quality and/or performances of robotic planning and simulation applications.

Embodiments enable time savings in fact there is no need to use kinematic inverse calculation, to run motion simulations, to communicate with external motion modules, and/or to calculate a swept volume during a robotic operation. Advantageously, with embodiments, the provided Machine Learning motion-outcome prediction module deliver results in a fast manner independently from the robotic motion complexity.

Embodiments enable upgrading performances of kinematic/robotic simulation applications (e.g. like "Robot Viewer", "Swept Volume", "Automatic Path Planner" and other) due to time savings involved in avoiding running robotic simulations whilst still enabling the calculation of the swept volume for collision detection validations.

Embodiments enables upgrading the quality of several existing kinematic/robotic static applications (e.g. like "Robot Smart Place", "Reach Tests") that today do not use a robotic simulation for time savings reasons and therefore just jump the robot to the end target location and check collision only there. Advantageously, with embodiments, static robotic applications can perform collision detections too.

Figure 1 illustrates a block diagram of a data processing system 100 in which an embodiment can be implemented, for example as a PDM system particularly configured by software or otherwise to perform the processes as described herein, and in particular as each one of a plurality of interconnected and communicating systems as described herein. The data processing system 100 illustrated can include a processor 102 connected to a level two cache/bridge 104, which is connected in turn to a local system bus 106. Local system bus 106 may be, for example, a peripheral component interconnect (PCI) architecture bus. Also connected to local system bus in the illustrated example are a main memory 108 and a graphics adapter 110. The graphics adapter 110 may be connected to display 111.

Other peripherals, such as local area network (LAN) / Wide Area Network / Wireless (*e.g.* WiFi) adapter 112, may also be connected to local system bus 106. Expansion bus interface 114 connects local system bus 106 to input/output (I/O) bus 116. I/O bus 116 is connected to keyboard/mouse adapter 118, disk controller 120, and I/O adapter 122. Disk controller 120 can be connected to a storage 126, which can be any suitable machine usable or machine readable storage medium, including but are not limited to nonvolatile, hard-coded type mediums such as read only memories (ROMs) or erasable, electrically programmable read only memories (EEPROMs), magnetic tape storage, and user-recordable type mediums such as floppy disks, hard disk drives and compact disk read only memories (CD-ROMs) or digital versatile disks (DVDs), and other known optical, electrical, or magnetic storage devices.

Also connected to I/O bus 116 in the example shown is audio adapter 124, to which speakers (not shown) may be connected for playing sounds. Keyboard/mouse adapter 118 provides a connection for a pointing device (not shown), such as a mouse, trackball, trackpointer, touchscreen, etc.

Those of ordinary skill in the art will appreciate that the hardware illustrated in Figure 1 may vary for particular implementations. For example, other peripheral devices, such as an optical disk drive and the like, also may be used in addition or in place of the hardware illustrated. The illustrated example is provided for the purpose of explanation only and is not meant to imply architectural limitations with respect to the present disclosure.

A data processing system in accordance with an embodiment of the present disclosure can include an operating system employing a graphical user interface. The operating system permits multiple display windows to be presented in the graphical user interface simultaneously, with each display window providing an interface to a different application or to a different instance of the same application. A cursor in the graphical user interface may be manipulated by a user through the pointing device. The position of the cursor may be changed and/or an event, such as clicking a mouse button, generated to actuate a desired response.

One of various commercial operating systems, such as a version of Microsoft Windows^{™}, a product of Microsoft Corporation located in Redmond, Wash. may be employed if suitably modified. The operating system is modified or created in accordance with the present disclosure as described.

LAN/ WAN/Wireless adapter 112 can be connected to a network 130 (not a part of data processing system 100), which can be any public or private data processing system network or combination of networks, as known to those of skill in the art, including the Internet. Data processing system 100 can communicate over network 130 with server system 140, which is also not part of data processing system 100, but can be implemented, for example, as a separate data processing system 100.

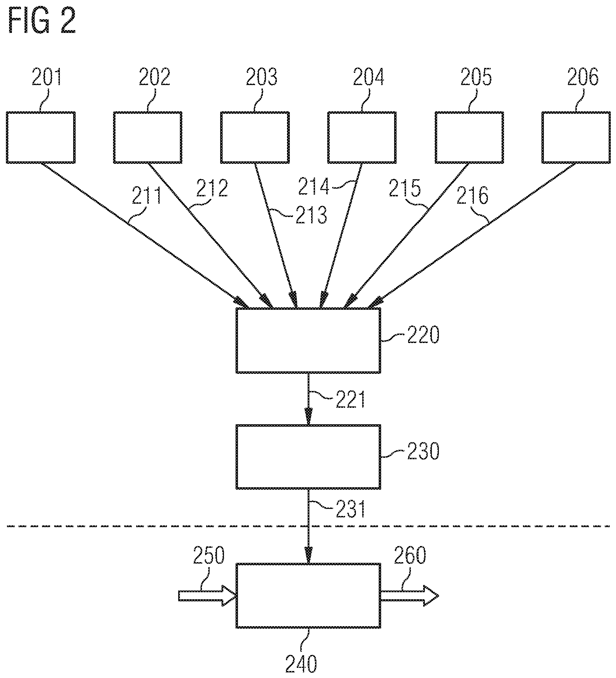

Figure 2 is a flow chart schematically illustrating training and using of a robotic motion-outcome prediction module in accordance with disclosed embodiments.

For an industrial robot (not shown) of a specific type and vendor, motion-outcome training data 211, 212, 213, 214, 215, 216 can be received from different types of data sources 201, 202, 203, 204, 205, 206.

As used herein, the term robot indicates an industrial robot, any other type of robot, or any type of kinematic machine.

A first type of training data sources 201, 202, 203 provide data retrieved from real motion of the specific physical robot and a second type of data sources 204, 205, 206 provide data retrieved from simulated motion of a virtual representation of the specific physical robot, herein called virtual robot. In embodiments, hybrid data sources combining the above may be provided. Robot vendors may advantageously provide input and output training data derived from different data sources.

Examples of physical data sources 201, 202 203 include position tracking systems like a camera 201, robotic Application Program Interfaces ("APIs") 202, Internet of Things ("IoT") sensors providing robotic motion-outcome data during the motion of the specific physical industrial robot while moving between a pair of robotic locations. The pair of robotic locations are a source location and a target location, for example a desired start point and end point of a robot's Tool Center Point Frame ("TCPF") or, in other embodiments, of a robot's Tool Center Point ("TCP").

Simulated data sources 204, 205, 206 include RCSs 204 , VRCs 205 and MOPs 206. Such three modules 204, 205, 206 simulate the robotic motion-outcome data during the motion of the virtual industrial robot between the robotic location pair.

In embodiments, the virtual robot (not shown) is loaded in a robotic simulation system where training motion data can be generated.

In embodiments, training data from virtual or real data are prepared.

In embodiments, motion training data from simulated data sources, are generated by running a plurality of robot simulation processes, preferably in the background and/or in parallel. Conveniently, the required calculations may be done without graphics.

Each process may run a plurality of simulations from reachable source locations to reachable target locations, hereinafter named *"robotic location pairs ",* each time with different robotic motion instructions and parameters. Examples of robotic motion instructions, hereinafter named *"robotic instructions"* include, but are not limited to, motion type, configuration, speed, acceleration and zone.

Data inputs to the simulations are data on position and/or robotic instructions on the robotic location pairs. For example, in embodiments, source location data may be given as 3D location coordinates with current robotic instructions data and target location data may be given as 3D location coordinates with its desired robotic instructions data. In other embodiments, location-pair position data may be given as current and target robot poses (e.g. respective joint values).

During each single simulation, a large amount of training data may preferably be gathered.

In embodiments, the received motion-outcome training data 211, 212, 213, 214, 215, 216 received from one or more of each data source 201, 202, 203, 204, 205, 206 are processed in a training-data processing module 220 so as to be organized in input and output training data for training a function based on the input training data and the output training data via a Machine Learning ("ML") algorithm.

In an exemplary embodiment, the input and output training data may be organized as follows:
- input training data, x tuples: robotic location pair data (e.g. position and robotic instructions), e.g. source location position (X,Y,Z,R_{X},R_{Y},R_{Z}) with its current robotic instructions (configuration, speed), target location (X,Y,Z,R_{X},R_{Y},R_{Z}) with its current robotic instructions (e.g. motion type, configuration, speed, acceleration, zone);
- output training data, y tuples: motion-outcome data (e.g. swept volume data cycle-time data, energy consumption data, robot's joint movement data, intermediate robotic locations data and/or other) of the robot motion between the location pair.

In embodiments, when the output training data describe the intermediate robotic locations (e.g. the list of sextets of joint values list of robotic pose values (j1, j2, j3, j4, j5, j6)) or when the output training data describe robot's joint movement data, the data set represents values at specific times during motion. In embodiments, the data sets may preferably have the same time reference values. For example, for a motion starting at time T_{S} and ending the latest at time T_{T}, the time references might be the sampling of the robot's state at fixed intervals. In embodiments where the sampling times are predefined, the time of each sampled value can be deduced from its index in the y tuple. In other embodiments, where values may be sampled at non-predefined time intervals, the sampling time values may preferably be included in the y tuples together with the other intermediate location values.

As used herein, the terms "pair of robotic locations" and "robotic location pair" indicate robotic source location and robotic target location referring respectively to a start of robotic motion and to an end of robotic motion during the robotic motion defining the desired robotic input bounds.

In embodiments, other robotic input bounds may be added. For example, in case of circular motion of the robot, a third location between the start point and the target point, usually called circular point, is needed to define the robotic input bound. Therefore, in case of circular motion, the x tuples of describe a robotic location triplet, a location pair, and a third location being the circular location.

For ML training, the number of columns denoted as M should preferably be the same for all locations. For y tuples describing intermediate robotic locations, there might however be cases in which the lists of intermediate poses have different lengths, denoted as N₀, N₁, Nᵢ<M due to the different numbers of robot's poses necessary to reach a given target location departing from a given source location. In embodiments, to obtain data sets with the same number of columns M for intermediate locations, the last pose may be duplicated as many times as necessary to get to M columns.

In embodiments, the processed data 221 entering ML training module 230 may preferably be in a numerical data format. In embodiments, where motion parameters are in a non-numerical data format, e.g. in a string format or in other non-numerical formats, a "hash of configuration" is generated to contain a numeric configuration index versus the configuration string so that a numerical data form can be used. In other embodiments, a new column will be added for each configuration with "0" value or "1" value so that for each line only one single "1" value is present, and all the other values are then "0".

Illustrated below is a simplified example of a map of robotic configuration strings and the corresponding index:

**Table 1: example of hash of configurations.**

| | |
|---|---|
| J5+J6-OH- | 1 |
| J5-J6+OH- | 2 |
| J5-J6+OH+ | 3 |
| J5+J6-OH+ | 4 |

In embodiments, when a new configuration not present in the map is encountered, the new configuration is conveniently inserted in the table with a new index.

In embodiments, if the specific robot cannot reach a desired target location from a desired source location, the robotic pose of the source location is duplicated until reaching the desired M columns.

The processed data 221 are elaborated to train a function with a Machine Learning (ML) algorithm, preferably with a machine learning algorithm selected from the group of supervised learning algorithms. The learned function f_{ML} is such that it can map at its best the x variable tuples into the y variable tuples.

The goal of the used ML algorithm is to approximate the mapping function so well that for a given input data (x tuple), the output variables (y tuple) can be predicted for that given input data.

The trained function data 231 are used to generate a prediction module 240 for predicting motion-outcome data of the specific robot.

The motion-outcome data prediction module 240 is used to predict the motion-outcome data of this specific robot so that when receiving as input a robotic location pair 250, in the form of x variable tuple values, it provides as resulting output 260 the y variable tuple values describing the motion-outcome data of the specific robot moving between the inputted robotic location pair 250.

In embodiments, the motion-outcome data prediction module 240 may be used as a stand-alone module, e.g. a cloud service for robotic planning and validations. In other embodiments, the motion prediction module may be used as a stand-alone module by a virtual simulation system. In other embodiments, the motion prediction module may be embedded 240 within a virtual simulation system. In other embodiments, in the form of "hybrid configurations", the prediction module 240 can be used - standalone or embedded - in conjunction with one or more motion planning modules, as for example, prediction modules of generic motion planners, RCS modules, and others.

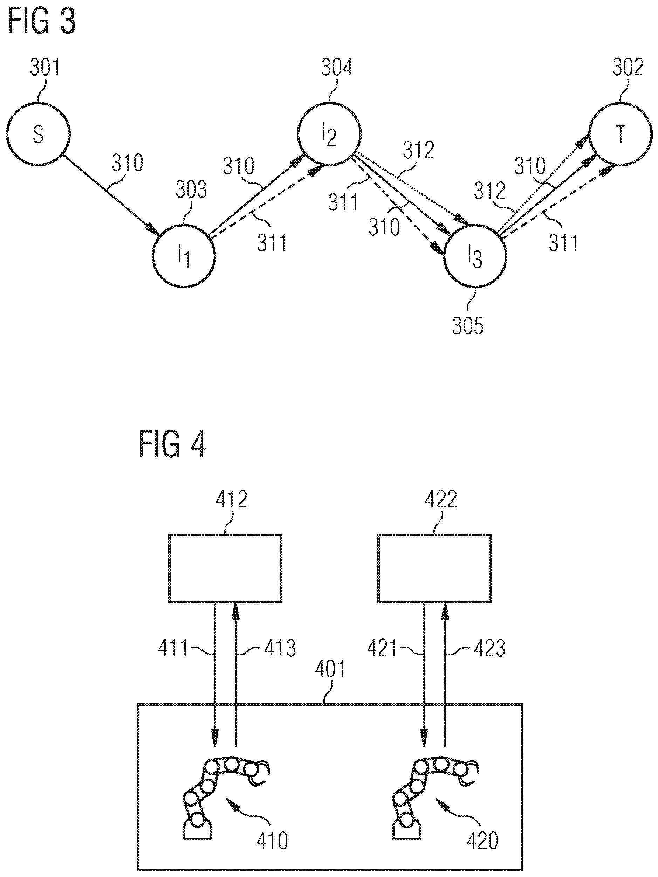

In embodiments, to increase the amount of training data sets, source locations other than the original main source location may be used as exemplified in the embodiment of Figure 3. At least one of intermediate robot locations can be captured along the motion trajectory - from the physical or virtual robot - as one of the desired location pairs for training purposes.

Multiple training data sets may be generated from a single virtual robot's motion or a single tracked physical robot's motion. For the same original target location, different training data sets can be generated by using different intermediate locations as start locations. In embodiments, the target location is the original target of the tracked movement for all these sets. For each generated set, input data for the start location are included in input training data - tuple x.

In embodiments, a conversion formatting table is generated. The conversion formatting table maps the original format of the received training data into a numerical format for the x,y tuples suitable for machine learning, e.g. for training and/or usage purposes.

Figure 3 is a graph schematically illustrating how to increase training data in accordance with disclosed embodiments.

An original main robotic location pair 301, 302 is illustrated, comprising the original main source location 301 and the original main target location 302. Between the main location pair, a plurality of intermediate robotic locations 303, 304, 305, are collected along the motion trajectory of the robot's TCPF (not shown). For any couple of source location (first or intermediate) and target location (the original motion target) data are collected as a list of robot poses versus delta times, preferably including corresponding robotic motion parameters.

In Figure 3, the robotic locations 301, 302, 303, 304, 305 are nodes of three directed graphs 310, 311, 312 each representing a robotic motion from a source node to a target node. The original main graph 310 goes from the main source node 301 to main target node 302. The other two generated direct graphs 311, 312 obtained by adding the corresponding edges 311, 312 go from intermediate nodes 303, 304 to the end node 302. In embodiments, other graphs may be generated.

Hence, as shown in Figure 3, the amount of training data sets can be advantageously increased by adding intermediate locations between the location pair along the robot's TCPF trajectory.

Figure 4 is a block diagram schematically illustrating a plurality of robotic motion-outcome prediction modules in accordance with disclosed embodiments.

In embodiments, a robotic application 401 simulates the motion-outcome behavior of one or more specific robots of one or more specific robot vendors with a plurality of ML motion-outcome prediction modules 412, 422.

In the exemplary embodiment of Figure 4, a first robot 410 may be a specific model of an ABB robot and the second robot 420 may be a specific model of a KUKA robot.

The virtual simulation system predicts the motion-outcome behavior of the specific robot 410, 420 by inputting the data on a given robotic location pair 411, 412 into the corresponding specific ML motion prediction module 412, 422 and by receiving the ML predicted motion-outcome 413, 423 of the specific robot during its motion between the inputted robotic location pair 411, 421.

Example embodiment algorithm: the motion-outcome data is swept-volume data The below described example embodiment algorithm refers to the embodiment where the robotic motion-outcome data is swept volume data of a specific robot. The skilled person can easily apply the teachings of this specific example embodiments to other embodiments with other robotic motion-outcome data like for example cycle-time data, energy consumption data, robot's joint movement data, intermediate robotic locations data and other robotic motion-outcome data.

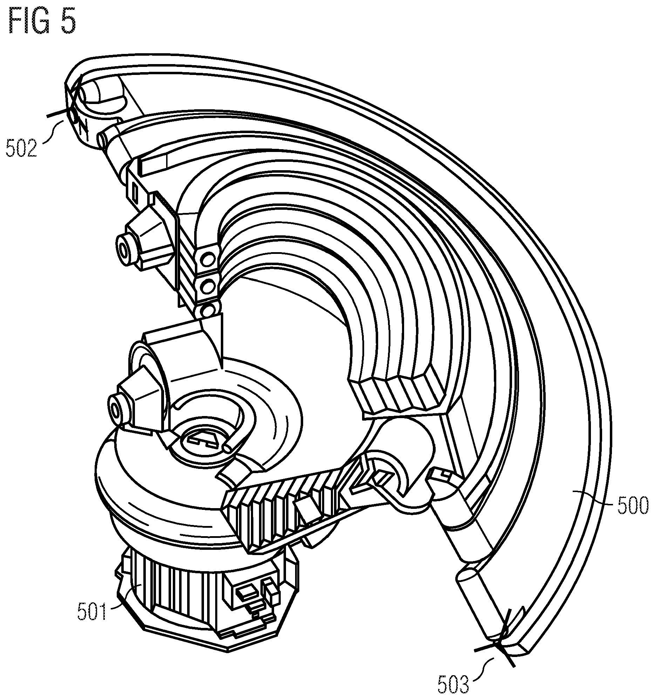

Figure 5 is a drawing schematically illustrating a swept volume of a robot in accordance with disclosed embodiments. The robotic swept volume 500 is generated by the robot 501 with its attached tool during its motion from a source location 502 to a final target location 503.

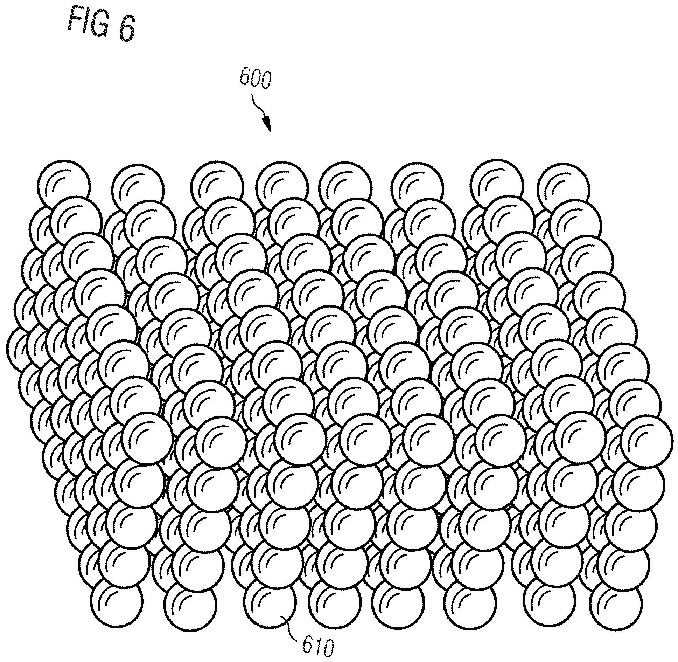

Figure 6 is a drawing schematically illustrating a cloud of points representing a 3D space around a robot (not shown) in accordance with disclosed embodiments. Each point 610, hereby illustrated with a sphere-shaped sub-volume, is a unit of a volume 600 of the 3D space around the robot. In other embodiment representations, the volume unit 610 may be represented with a point, with a cube-shaped sub-volume or with other types of shape sub-elements.

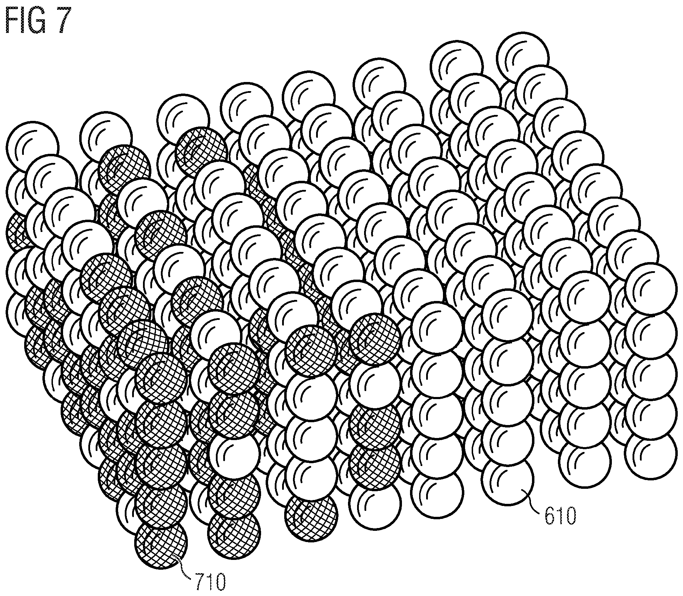

Figure 7 is a drawing schematically illustrating highlighted points representing a swept volume of the robot in the 3D space around the robot. The collection of the highlighted points 710 represents the swept volume of the robot (not shown).

The exemplary algorithm embodiment includes the following steps.
*1) Preparing the training data:*
   1.a) mapping an envelope of a robot with a cloud of points 600;
   1.b) for each robotic task, simulating a single robotic motion from a source robotic location (with current values of robotic instructions) forward to a target robotic location (with desired values of robotic instructions);
   1.c) during the robot's motion, marking each point touched by the robot; all the marked points 710 representing the robot's swept volume;
   1.d) optionally: in case of a robot without tool, collecting the robot Tool Frame trajectory list (e.g. position and orientation data set).
*2) Data processing for preparing the x tuple and y tuple for Machine Learning:*
   2.a) optionally: increasing the training data set by using computed intermediate locations as source locations;
   2.b) inserting data in each x tuple:
      - source location data (with its robotic instructions data) and target location data (with its motion instructions data);
   2.c) inserting data in each y tuple:
      - all the marked points, e.g. represented by their (X,Y,Z) coordinates or by their point indexes;
      - optionally: the robot Tool Frame list, e.g. represented by their position and orientation coordinates (X,Y,Z,R_{X},R_{Y},R_{Z}).
3) *Providing a trained ML module:*
   - training a ML function with a supervised algorithm and exposing the resulting ML-trained function as a trained ML module.
*4) Detecting collisions by using the ML trained module:*
   4.a) For each collision detection request, applying to the ML trained module a x tuple with data on locations pair and robotic instructions and getting get back as results the corresponding y tuple with data on the robot's swept volume points;
   4.b) optionally, in case of a mounted tool (e.g. a gun or even gripper which holds a part), reallocating it at the first Tool Frame (from y tuple), and jumping it along the other Tool Frames data of the list to obtain the swept volume of the robot with the mounted tool;
   4.c) checking the presence of possible collisions between the robotic swept volume and any possible obstacle;
   4.d) in case of detected collision, showing the collision points and the critical robotic locations pairs.

Advantageously, by applying the ML trained module, the robot's swept volume is calculated without running a robot's simulation.

In embodiments, in order to support different robot TCPFs, the x tuple may further include differential information between robot tool frame versus current TCPF in x tuple.

In embodiments, in order to support different robot base positions, the data on locations pair in the x tuple may be given relative to the robot base like in a regular downloaded robotic program.

In embodiments, the quantity of used points for training the ML module may conveniently be reduced by marking only the outside points which are wrapping the robot's swept volume and by ignoring the point inside the swept volume.

Embodiments include predicting motion-outcome data of a robot moving between a given pair of robotic locations, comprising: receiving a plurality of robotic location pair data as input training data; receiving a plurality of motion-outcome data as output training data, wherein the plurality of motion-outcome data is related to the plurality robotic location pair data; training by a machine learning algorithm a function based on the input training data and output training data, providing the trained function as motion-outcome prediction module for predicting as output data motion-outcome data of a robot moving between a corresponding pair of robotic locations; predicting motion-outcome data by applying the motion-outcome prediction module to a given robotic location pair as input data.

Embodiments include a method for predicting motion-outcome data of a robot moving between a given pair of robotic locations, comprising: receiving training data of motion trajectories of the robot for a plurality of robotic location pairs; processing the training data so as to obtain x tuples and y tuples for machine learning purposes; wherein the x tuples describe the robotic location pair and the y tuples describe one or more intermediate robotic locations at specific time stamps during the motion of the robot between the location pair; learning from the processed data a function mapping the x tuples into the y tuples so as to generate a motion prediction module for the robot; for a given robotic location pair, predicting the robotic motion-outcome data between the given pair by getting the corresponding intermediate locations resulting from the motion prediction module.

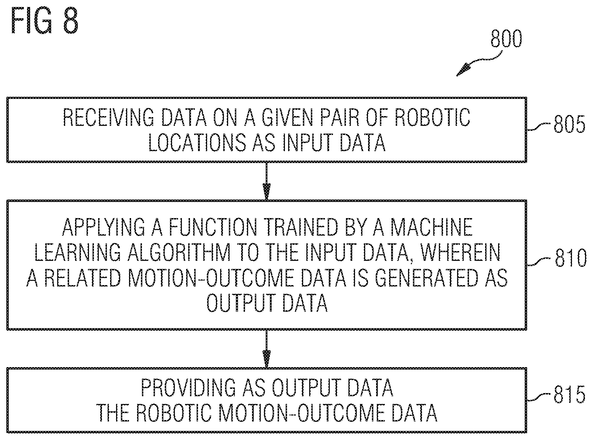

Figure 8 illustrates a flowchart 800 of a method for predicting a robotic motion-outcome of a specific robot moving between a given pair of robotic locations in accordance with disclosed embodiments. Such method can be performed, for example, by system 100 of Figure 1 described above, but the "system" in the process below can be any apparatus configured to perform a process as described.

At act 805, data on a given pair of robotic locations is received as input data.

At act 810, a function trained by a machine learning algorithm is applied to the input data, wherein a related robotic motion-outcome data is generated as output data.

At act 815, the robotic motion-outcome data is provided as output data.

The motion-outcome the motion-outcome data comprises robotic swept volume data and can comprise in addition one from the group consisting of energy consumption data; of cycle time data; of joint movement data; of intermediate robotic locations data; of other types of motion-outcome data; and any data set comprising any combination of the above data.

In embodiments, a conversion formatting table is generated for mapping the original format of the received input data into a numerical format suitable for applying the trained function to the input data.

In embodiments, the x tuples comprise one or more information pieces selected from the group consisting of: information on positions of the robotic location pair; information on robotic instructions at the robotic location pair; and/or information on a differential position between a robotic tool tip point and a robotic tool frame point. In embodiments, information on positions of the robotic location pair of the x tuples are given as relative to a given reference frame of the robot. In embodiments, the y tuples comprise information on position of the one or more intermediate locations and/or information on robotic instructions of the one or more intermediate robotic locations.

In embodiments, the x tuple describing the location pair comprise at least information on the positions of the location pair (e.g. poses, positions and/or directions of the location pair) and, optionally, it may additionally comprise information on the robotic motion at the location pair (e.g. speed, acceleration, tension, state and/or other robotic motion related information/instructions at the location pair).

In embodiments, the x tuple comprises the minimum information required for describing the desired motion planning of the specific robot.

In embodiments, position information of the location pair and/or of the intermediate locations may conveniently be given as relative to a given reference frame of the specific robot. Preferably, the given reference frame of the specific robot may be the robot base frame as it is typically the case with downloaded robotic programs. Advantageously, in this manner, different base positions of specific robots can be flexibly supported by the ML prediction module.

In embodiments, the x tuple describing the location pair comprises robotic tool-related information. For example, robot tool-related information may comprise robot's tool type and/or tool differential position information. The differential tool position information may preferably be the delta between the robot's tool frame and the robot's TCPF frame. Advantageously, in this manner, different types of robotic tools/TCPFs can be flexibly supported by the ML prediction module and the related kinematic impact is then taken into account. Advantageously, embodiments wherein different robot's tools are used in different location pairs can be flexibly supported by the ML prediction module, e.g. for one location pair robot's tool A is used and for another location pair robot's tool B is used.

In embodiments, the information describing the location position may be given in the form of spatial coordinates describing the robot's tip position independently on the robot type or it may be given as robot poses (e.g. via robot's joint values). In other embodiments, the location position information may be given in other formats that may or may not be robot specific.

It is important to note that while the disclosure includes a description in the context of a fully functional system, those skilled in the art will appreciate that at least portions of the present disclosure are capable of being distributed in the form of instructions contained within a machine-usable, computer-usable, or computer-readable medium in any of a variety of forms, and that the present disclosure applies equally regardless of the particular type of instruction or signal bearing medium or storage medium utilized to actually carry out the distribution. Examples of machine usable/readable or computer usable/readable mediums include: nonvolatile, hard-coded type mediums such as read only memories (ROMs) or erasable, electrically programmable read only memories (EEPROMs), and user-recordable type mediums such as floppy disks, hard disk drives and compact disk read only memories (CD-ROMs) or digital versatile disks (DVDs).

Although an exemplary embodiment of the present disclosure has been described in detail, those skilled in the art will understand that various changes, substitutions, variations, and improvements disclosed herein may be made within the scope of the appended claims, which define the invention.

## Claims

1. A method for predicting, by a data processing system (100), motion-outcome data of a specific industrial robot moving between a given pair of robotic locations (301, 302), comprising the following steps:
a) receiving data on a given pair of robotic locations (301, 302) of the specific industrial robot as input data (250);
b) applying a function for predicting robotic swept volume data trained by a machine learning algorithm to the input data (250), wherein a related robotic motion-outcome data is generated as output data (260), wherein the robotic motion-outcome data comprises robotic swept volume data;
c) providing as output data the robotic motion-outcome data with robotic swept volume data as collection of sphere-shaped points and without running a robot's simulation; said robotic swept volume data being useful in industrial automation for detecting potential robotic collisions along their path during a specific robotic program for validation or optimization purposes; and
the method further including:
receiving a plurality of robotic location pair data as input training data (211-216);
receiving a plurality of motion-outcome data as output training data, wherein the plurality of the motion-outcome data is related to the plurality of robotic location pair data and it comprises the swept volume as collection of sphere-shaped points touched by the robot;
training, by the machine learning algorithm, the function for predicting robotic motion-outcome data based on the input training data (211-216) and on the output training data; and providing the trained function.

2. The method of claim 1, wherein the motion-outcome data comprises in addition one from the group consisting of:
- energy consumption data;
- cycle time data;
- joint movement data;
- intermediate robotic locations data;
- other types of motion-outcome data;
- any data set comprising any combination of the above data.

3. The method of claim 1, further including generating a conversion formatting table to map the original format of the received input data (250) into a numerical format suitable for applying the trained function to the input data (250).

4. The method of claim 1, wherein the input data (250) comprise one or more information pieces selected from the group consisting of:
- information on positions of the robotic location pair (250);
- information on robotic instructions at the robotic location pair (250);
- information on a differential position between a robotic tool tip point and a robotic tool frame point.

5. A data processing system (100) comprising:
a processor (102); and
an accessible memory (108), the data processing system (100) particularly configured to:
a) receive data (250) on a given pair of robotic locations (301, 302) of a specific industrial robot as input data (250);
b) apply a function for predicting robotic swept volume data trained by a machine learning algorithm to the input data (250); wherein a related robotic motion-outcome data is generated as output data (260), wherein the robotic motion-outcome data comprises robotic swept volume data;
provide as output data the robotic motion-outcome data with robotic swept volume data as collection of sphere-shaped points and without running a robot's simulation; said robotic swept volume data being useful in industrial automation for detecting potential robotic collisions along their path during a specific robotic program for validation or
optimization purposes; and
the further including:
receiving a plurality of robotic location pair data as input training data (211-216);
receiving a plurality of motion-outcome data as output training data, wherein the plurality of the motion-outcome data is related to the plurality of robotic location pair data and it comprises the swept volume as collection of sphere-shaped points touched by the robot;
training, by the machine learning algorithm, the function for predicting robotic motion-outcome data based on the input training data (211-216) and on the output training data; and providing the trained function.

6. The data processing system of claim 5, wherein the motion-outcome data comprises in addition one from the group consisting of:
- energy consumption data;
- cycle time data;
- joint movement data;
- intermediate robotic locations data;
- other types of motion-outcome data;
- any data set comprising any combination of the above data.

7. The data processing system (100) of claim 5, configured to generate a conversion formatting table to map the original format of the received input data (250) into a numerical format suitable for applying the trained function to the input data (250).

8. The data processing system (100) of claim 5, wherein the input data (250) comprise one or more information pieces selected from the group consisting of:
- information on positions of the robotic location pair (250);
- information on robotic instructions at the robotic location pair (250);
- information on a differential position between a robotic tool tip point and a robotic tool frame point.

9. A non-transitory computer-readable medium encoded with executable instructions that, when executed, cause one or more data processing systems (100) to:
a) receive data on a given pair of robotic locations (301, 302) of a specific industrial robot as input data (250);
b) apply a function for predicting robotic swept volume data trained by a machine learning algorithm to the input data (250); wherein a related robotic motion-outcome data is generated as output data (260), wherein the robotic motion-outcome data comprises robotic swept volume data;
provide as output data the robotic motion-outcome data;
with robotic swept volume data as collection of sphere-shaped points and without running a robot's simulation; said robotic swept volume data being useful in industrial automation for detecting potential robotic collisions along their path during a specific robotic program for validation or optimization purposes; and
the further including:
receiving a plurality of robotic location pair data as input training data (211-216);
receiving a plurality of motion-outcome data as output training data, wherein the plurality of the motion-outcome data is related to the plurality of robotic location pair data and it comprises the swept volume as collection of sphere-shaped points touched by the robot; training, by the machine learning algorithm, the function for predicting robotic motion-outcome data based on the input training data (211-216) and on the output training data; and providing the trained function.

10. The non-transitory computer-readable medium of claim 9, wherein the motion-outcome data comprises in addition one from the group consisting of:
- energy consumption data;
- cycle time data;
- joint movement data;
- intermediate robotic locations data;
- other types of motion-outcome data;
- any data set comprising any combination of the above data.

11. The non-transitory computer-readable medium of claim 9, configured to generate a conversion formatting table to map the original format of the received input data (250) into a numerical format suitable for applying the trained function to the input data (250).

12. The non-transitory computer-readable medium of claim 9, wherein the input data (250) comprise one or more information pieces selected from the group consisting of:
- information on positions of the robotic location pair (250);
- information on robotic instructions at the robotic location pair (250);
- information on a differential position between a robotic tool tip point and a robotic tool frame point.

## Patentansprüche

1. Verfahren zum Prognostizieren von Bewegungsergebnisdaten für einen bestimmten Industrieroboter, der sich zwischen einem vorgegebenen Paar Roboterstandorte (301, 302) bewegt, durch ein Datenverarbeitungssystem (100) mit folgenden Schritten:
a) Empfangen von Daten zu einem vorgegebenen Paar Roboterstandorte (301, 302) des bestimmten Industrieroboters als Eingabedaten (250),
b) Anwenden einer von einem Machine-Learning-Algorithmus trainierten Funktion für das Prognostizieren von Daten zum vom Roboter überstrichenen Volumen auf die Eingabedaten (250), wobei damit in Zusammenhang stehende Roboterbewegungsergebnisdaten als Ausgabedaten (260) generiert werden, wobei die Roboterbewegungsergebnisdaten Daten zum vom Roboter überstrichenen Volumen umfassen,
c) Bereitstellen der Roboterbewegungsergebnisdaten mit Daten zum vom Roboter überstrichenen Volumen als Ausgabedaten als Ansammlung von kreisförmigen Punkten und ohne Ausführen einer Robotersimulation, wobei die Daten zum vom Roboter überstrichenen Volumen bei der industriellen Automation für das Erkennen von potentiellen Roboterkollisionen auf deren Weg im Verlauf eines bestimmten Roboterprogramms zu Validierungs- oder Optimierungszwecken nützlich sind, und
wobei das Verfahren ferner Folgendes umfasst:
Empfangen mehrerer Daten zu Roboterstandortpaaren als Trainingseingabedaten (211-216),
Empfangen mehrerer Bewegungsergebnisdaten als Trainingsausgabedaten, wobei die mehreren Bewegungsergebnisdaten mit den mehreren Daten zu Roboterstandortpaaren in Zusammenhang stehen und das überstrichene Volumen als Ansammlung von kreisförmigen Punkten umfassen, die von dem Roboter gestreift werden,
Trainieren der Funktion für das Prognostizieren von Roboterbewegungsergebnisdaten auf der Grundlage der Trainingseingabedaten (211-216) und der Trainingsausgabedaten durch den Machine-Learning-Algorithmus und Bereitstellen der trainierten Funktion.

2. Verfahren nach Anspruch 1, wobei die Bewegungsergebnisdaten zusätzlich dazu ein Element aus der Gruppe umfassen, die aus Folgendem besteht:
- Daten zum Energieverbrauch,
- Daten zur Taktzeit,
- Daten zu Gelenkbewegungen,
- Daten zu Roboterzwischenstandorten,
- andere Arten von Bewegungsergebnisdaten,
- beliebige Datensätze, die beliebige Kombinationen aus den obigen Daten umfassen.

3. Verfahren nach Anspruch 1, das ferner das Generieren einer Umrechnungsformatiertabelle zwecks Abbildens des ursprünglichen Formats der empfangenen Eingabedaten (250) in einem Zahlenformat umfasst, das sich für das Anwenden der trainierten Funktion auf die Eingabedaten (250) eignet.

4. Verfahren nach Anspruch 1, wobei die Eingabedaten (250) eine oder mehrere Informationen umfassen, welche aus der Gruppe ausgewählt sind, die aus Folgendem besteht:
- Informationen zu Positionen des Roboterstandortpaars (250),
- Informationen zur Roboterbefehlen an dem Roboterstandortpaar (250),
- Informationen zu einer Positionsdifferenz zwischen einem Roboterwerkzeugspitzenpunkt und einem Roboterwerkzeugkoordinatenpunkt.

5. Datenverarbeitungssystem (100), das Folgendes umfasst:
einen Prozessor (102) und
einen verfügbaren Speicher (108), wobei das
Datenverarbeitungssystem (100) insbesondere so konfiguriert ist, dass es:
a) Daten (250) zu einem vorgegebenen Paar Roboterstandorte (301, 302) eines bestimmten Industrieroboters als Eingabedaten (250) empfängt,
b) eine von einem Machine-Learning-Algorithmus trainierte Funktion für das Prognostizieren von Daten zum vom Roboter überstrichenen Volumen auf die Eingabedaten (250) anwendet, wobei damit in Zusammenhang stehende Roboterbewegungsergebnisdaten als Ausgabedaten (260) generiert werden, wobei die Roboterbewegungsergebnisdaten Daten zum vom Roboter überstrichenen Volumen umfassen,
die Roboterbewegungsergebnisdaten mit Daten zum vom Roboter überstrichenen Volumen als Ausgabedaten als Ansammlung von kreisförmigen Punkten und ohne Ausführen einer Robotersimulation bereitstellt, wobei die Daten zum vom Roboter überstrichenen Volumen bei der industriellen Automation für das Erkennen von potentiellen Roboterkollisionen auf deren Weg im Verlauf eines bestimmten Roboterprogramms zu Validierungs- oder Optimierungszwecken nützlich sind, und
ferner mit Folgendem:
Empfangen mehrerer Daten zu Roboterstandortpaaren als Trainingseingabedaten (211-216),
Empfangen mehrerer Bewegungsergebnisdaten als Trainingsausgabedaten, wobei die mehreren Bewegungsergebnisdaten mit den mehreren Daten zu Roboterstandortpaaren in Zusammenhang stehen und das überstrichene Volumen als Ansammlung von kreisförmigen Punkten umfassen, die von dem Roboter gestreift werden,
Trainieren der Funktion für das Prognostizieren von Roboterbewegungsergebnisdaten auf der Grundlage der Trainingseingabedaten (211-216) und der Trainingsausgabedaten durch den Machine-Learning-Algorithmus und Bereitstellen der trainierten Funktion.

6. Datenverarbeitungssystem nach Anspruch 5, wobei die Bewegungsergebnisdaten zusätzlich dazu ein Element aus der Gruppe umfassen, die aus Folgendem besteht:
- Daten zum Energieverbrauch,
- Daten zur Taktzeit,
- Daten zu Gelenkbewegungen,
- Daten zu Roboterzwischenstandorten,
- andere Arten von Bewegungsergebnisdaten,
- beliebige Datensätze, die beliebige Kombinationen aus den obigen Daten umfassen.

7. Datenverarbeitungssystem (100) nach Anspruch 5, das so konfiguriert ist, dass es zwecks Abbildens des ursprünglichen Formats der empfangenen Eingabedaten (250) in einem Zahlenformat, das sich für das Anwenden der trainierten Funktion auf die Eingabedaten (250) eignet, eine Umrechnungsformatiertabelle generiert.

8. Datenverarbeitungssystem (100) nach Anspruch 5, wobei die Eingabedaten (250) eine oder mehrere Informationen umfassen, welche aus der Gruppe ausgewählt sind, die aus Folgendem besteht:
- Informationen zu Positionen des Roboterstandortpaars (250),
- Informationen zur Roboterbefehlen an dem Roboterstandortpaar (250),
- Informationen zu einer Positionsdifferenz zwischen einem Roboterwerkzeugspitzenpunkt und einem Roboterwerkzeugkoordinatenpunkt.

9. Nichtflüchtiges, computerlesbares Medium, das mit ausführbaren Anweisungen codiert ist, die, wenn sie ausgeführt werden, bewirken, dass ein oder mehrere Datenverarbeitungssysteme (100):
a) Daten zu einem vorgegebenen Paar Roboterstandorte (301, 302) eines bestimmten Industrieroboters als Eingabedaten (250) empfangen,
b) eine von einem Machine-Learning-Algorithmus trainierte Funktion für das Prognostizieren von Daten zum vom Roboter überstrichenen Volumen auf die Eingabedaten (250) anwenden,
wobei damit in Zusammenhang stehende Roboterbewegungsergebnisdaten als Ausgabedaten (260) generiert werden, wobei die Roboterbewegungsergebnisdaten Daten zum vom Roboter überstrichenen Volumen umfassen,
die Roboterbewegungsergebnisdaten mit Daten zum vom Roboter überstrichenen Volumen als Ausgabedaten als Ansammlung von kreisförmigen Punkten und ohne Ausführen einer Robotersimulation bereitstellen, wobei die Daten zum vom Roboter überstrichenen Volumen bei der industriellen Automation für das Erkennen von potentiellen Roboterkollisionen auf deren Weg im Verlauf eines bestimmten Roboterprogramms zu Validierungs- oder Optimierungszwecken nützlich sind, und
ferner mit Folgendem:
Empfangen mehrerer Daten zu Roboterstandortpaaren als Trainingseingabedaten (211-216),
Empfangen mehrerer Bewegungsergebnisdaten als Trainingsausgabedaten, wobei die mehreren Bewegungsergebnisdaten mit den mehreren Daten zu Roboterstandortpaaren in Zusammenhang stehen und das überstrichene Volumen als Ansammlung von kreisförmigen Punkten umfassen, die von dem Roboter gestreift werden, Trainieren der Funktion für das Prognostizieren von Roboterbewegungsergebnisdaten auf der Grundlage der Trainingseingabedaten (211-216) und der Trainingsausgabedaten durch den Machine-Learning-Algorithmus und Bereitstellen der trainierten Funktion.

10. Nichtflüchtiges, computerlesbares Medium nach Anspruch 9, wobei die Bewegungsergebnisdaten zusätzlich dazu ein Element aus der Gruppe umfassen, die aus Folgendem besteht:
- Daten zum Energieverbrauch,
- Daten zur Taktzeit,
- Daten zu Gelenkbewegungen,
- Daten zu Roboterzwischenstandorten,
- andere Arten von Bewegungsergebnisdaten,
- beliebige Datensätze, die beliebige Kombinationen aus den obigen Daten umfassen.

11. Nichtflüchtiges, computerlesbares Medium nach Anspruch 9, das so konfiguriert ist, dass es zwecks Abbildens des ursprünglichen Formats der empfangenen Eingabedaten (250) in einem Zahlenformat, das sich für das Anwenden der trainierten Funktion auf die Eingabedaten (250) eignet, eine Umrechnungsformatiertabelle generiert.

12. Nichtflüchtiges, computerlesbares Medium nach Anspruch 9, wobei die Eingabedaten (250) eine oder mehrere Informationen umfassen, welche aus der Gruppe ausgewählt sind, die aus Folgendem besteht:
- Informationen zu Positionen des Roboterstandortpaars (250),
- Informationen zur Roboterbefehlen an dem Roboterstandortpaar (250),
- Informationen zu einer Positionsdifferenz zwischen einem Roboterwerkzeugspitzenpunkt und einem Roboterwerkzeugkoordinatenpunkt.

## Revendications

1. Procédé pour prédire, par un système de traitement de données (100), des données de résultat de mouvement d'un robot industriel spécifique se déplaçant entre une paire donnée d'emplacements robotiques (301, 302), comprenant les étapes suivantes :
a) le fait de recevoir des données sur une paire donnée d'emplacements robotiques (301, 302) du robot industriel spécifique en tant que données d'entrée (250) ;
b) le fait d'appliquer aux données d'entrée (250) une fonction pour prédire des données de volume balayé robotique, ladite fonction étant entraînée par un algorithme d'apprentissage machine, dans lequel des données de résultat de mouvement robotique associées sont générées en tant que données de sortie (260), dans lequel les données de résultat de mouvement robotique comprennent des données de volume balayé robotique ;
c) le fait de fournir en tant que données de sortie les données de résultat de mouvement robotique avec des données de volume balayé robotique sous forme de collection de points en forme de sphère et sans lancer une simulation de robot ; lesdites données de volume balayé robotique étant utiles en automatisation industrielle pour détecter de potentielles collisions robotiques le long de leur chemin durant un programme robotique spécifique à des fins de validation ou d'optimisation ; et
le procédé incluant en outre :
le fait de recevoir une pluralité de données de paire d'emplacements robotiques en tant que données d'entraînement d'entrée (211 à 216) ;
le fait de recevoir une pluralité de données de résultat de mouvement en tant que données d'entraînement de sortie, dans lequel la pluralité des données de résultat de mouvement est associée à la pluralité de données de paire d'emplacements robotiques et elle comprend le volume balayé sous forme de collection de points en forme de sphère touchés par le robot ;
le fait d'entraîner, par l'algorithme d'apprentissage machine, la fonction pour prédire des données de résultat de mouvement robotique sur la base des données d'entraînement d'entrée (211 à 216) et des données d'entraînement de sortie ; et le fait de fournir la fonction entraînée.

2. Procédé selon la revendication 1, dans lequel les données de résultat de mouvement comprennent de plus un élément dans le groupe constitué :
- de données de consommation d'énergie ;
- de données de temps de cycle ;
- de données de mobilité articulaire ;
- de données d'emplacements robotiques intermédiaires ;
- d'autres types de données de résultat de mouvement ;
- d'un jeu de données quelconque comprenant une combinaison quelconque des données ci-dessus.

3. Procédé selon la revendication 1, incluant en outre le fait de générer un tableau de formatage et de conversion afin de mapper le format original des données d'entrée (250) reçues en un format numérique approprié pour appliquer la fonction entraînée aux données d'entrée (250).

4. Procédé selon la revendication 1, dans lequel les données d'entrée (250) comprennent une ou plusieurs informations sélectionnées dans le groupe constitué :
- d'informations sur des positions de la paire d'emplacements robotiques (250) ;
- d'informations sur des instructions robotiques au niveau de la paire d'emplacements robotiques (250) ;
- d'informations sur une position différentielle entre un point de pointe d'outil robotique et un point de cadre d'outil robotique.

5. Système de traitement de données (100) comprenant :
un processeur (102) ; et
une mémoire accessible (108), le système de traitement de données (100) étant en particulier configuré pour :
a) recevoir des données (250) sur une paire donnée d'emplacements robotiques (301, 302) d'un robot industriel spécifique en tant que données d'entrée (250) ;
b) appliquer aux données d'entrée (250) une fonction pour prédire des données de volume balayé robotique, ladite fonction étant entraînée par un algorithme d'apprentissage machine ; dans lequel des données de résultat de mouvement robotique associées sont générées en tant que données de sortie (260), dans lequel les données de résultat de mouvement robotique comprennent des données de volume balayé robotique ;
fournir en tant que données de sortie les données de résultat de mouvement robotique avec des données de volume balayé robotique sous forme de collection de points en forme de sphère et sans lancer une simulation de robot ; lesdites données de volume balayé robotique étant utiles en automatisation industrielle pour détecter de potentielles collisions robotiques le long de leur chemin durant un programme robotique spécifique à des fins de validation ou d'optimisation ; et
le système incluant en outre :
le fait de recevoir une pluralité de données de paire d'emplacements robotiques en tant que données d'entraînement d'entrée (211 à 216) ;
le fait de recevoir une pluralité de données de résultat de mouvement en tant que données d'entraînement de sortie, dans lequel la pluralité des données de résultat de mouvement est associée à la pluralité de données de paire d'emplacements robotiques et elle comprend le volume balayé sous forme de collection de points en forme de sphère touchés par le robot ;
le fait d'entraîner, par l'algorithme d'apprentissage machine, la fonction pour prédire des données de résultat de mouvement robotique sur la base des données d'entraînement d'entrée (211 à 216) et des données d'entraînement de sortie ; et le fait de fournir la fonction entraînée.

6. Système de traitement de données selon la revendication 5, dans lequel les données de résultat de mouvement comprennent de plus un élément dans le groupe constitué :
- de données de consommation d'énergie ;
- de données de temps de cycle ;
- de données de mobilité articulaire ;
- de données d'emplacements robotiques intermédiaires ;
- d'autres types de données de résultat de mouvement ;
- d'un jeu de données quelconque comprenant une combinaison quelconque des données ci-dessus.

7. Système de traitement de données (100) selon la revendication 5, configuré pour générer un tableau de formatage et de conversion afin de mapper le format original des données d'entrée (250) reçues en un format numérique approprié pour appliquer la fonction entraînée aux données d'entrée (250).

8. Système de traitement de données (100) selon la revendication 5, dans lequel les données d'entrée (250) comprennent une ou plusieurs informations sélectionnées dans le groupe constitué :
- d'informations sur des positions de la paire d'emplacements robotiques (250) ;
- d'informations sur des instructions robotiques au niveau de la paire d'emplacements robotiques (250) ;
- d'informations sur une position différentielle entre un point de pointe d'outil robotique et un point de cadre d'outil robotique.

9. Support lisible par ordinateur non transitoire codé avec des instructions exécutables qui, lorsqu'elles sont exécutées, amènent un ou plusieurs systèmes de traitement de données (100) à :
a) recevoir des données sur une paire donnée d'emplacements robotiques (301, 302) d'un robot industriel spécifique en tant que données d'entrée (250) ;
b) appliquer aux données d'entrée (250) une fonction pour prédire des données de volume balayé robotique, ladite fonction étant entraînée par un algorithme d'apprentissage machine; dans lequel des données de résultat de mouvement robotique associées sont générées en tant que données de sortie (260), dans lequel les données de résultat de mouvement robotique comprennent des données de volume balayé robotique ;
fournir en tant que données de sortie les données de résultat de mouvement robotique ;
avec des données de volume balayé robotique sous forme de collection de points en forme de sphère et sans lancer une simulation de robot ; lesdites données de volume balayé robotique étant utiles en automatisation industrielle pour détecter de potentielles collisions robotiques le long de leur chemin durant un programme robotique spécifique à des fins de validation ou d'optimisation ; et
le support incluant en outre :
le fait de recevoir une pluralité de données de paire d'emplacements robotiques en tant que données d'entraînement d'entrée (211 à 216) ;
le fait de recevoir une pluralité de données de résultat de mouvement en tant que données d'entraînement de sortie, dans lequel la pluralité des données de résultat de mouvement est associée à la pluralité de données de paire d'emplacements robotiques et elle comprend le volume balayé sous forme de collection de points en forme de sphère touchés par le robot ;
le fait d'entraîner, par l'algorithme d'apprentissage machine, la fonction pour prédire des données de résultat de mouvement robotique sur la base des données d'entraînement d'entrée (211 à 216) et des données d'entraînement de sortie ; et le fait de fournir la fonction entraînée.

10. Support lisible par ordinateur non transitoire selon la revendication 9, dans lequel les données de résultat de mouvement comprennent de plus un élément dans le groupe constitué :
- de données de consommation d'énergie ;
- de données de temps de cycle ;
- de données de mobilité articulaire ;
- de données d'emplacements robotiques intermédiaires ;
- d'autres types de données de résultat de mouvement ;
- d'un jeu de données quelconque comprenant une combinaison quelconque des données ci-dessus.

11. Support lisible par ordinateur non transitoire selon la revendication 9, configuré pour générer un tableau de formatage et de conversion afin de mapper le format original des données d'entrée (250) reçues en un format numérique approprié pour appliquer la fonction entraînée aux données d'entrée (250).

12. Support lisible par ordinateur non transitoire selon la revendication 9, dans lequel les données d'entrée (250) comprennent une ou plusieurs informations sélectionnées dans le groupe constitué :
- d'informations sur des positions de la paire d'emplacements robotiques (250) ;
- d'informations sur des instructions robotiques au niveau de la paire d'emplacements robotiques (250) ;
- d'informations sur une position différentielle entre un point de pointe d'outil robotique et un point de cadre d'outil robotique.
